# EUROPEAN PATENT SPECIFICATION

(11) **EP 4 470 794 B1**
(45) Date of publication and mention of the grant of the patent: **01.04.2026**
(21) Application number: 24177322.5
(22) Date of filing: 22.05.2024
(51) Int. Cl.: B60C 9/18, B60C 9/20

(54) **RADIAL TIRE**
RADIALER LUFTREIFEN
PNEUMATIQUE RADIAL

(30) Priority: 30.05.2023 US 202318325421
(43) Date of publication of application: 04.12.2024
(73) Proprietor: The Goodyear Tire & Rubber Company, Akron, OH 44316 (US)
(72) Inventor: UEYOKO, Kiyoshi, Copley, 44321 (US); SCHELLENBERGER, II, Michael William, Fairlawn, 44333 (US)
(74) Representative: Kutsch, Bernd

(56) References cited:
- EP-A1- 3 736 141
- EP-A1- 3 750 721
- JP-A- 2008 189 238
- JP-A- 2017 013 521
- JP-A- H0 316 808
- US-A- 4 934 428

## Description

### Technical Field

The present invention relates to a radial tire, and more particularly, to a radial tire, which may be suitable for an aircraft and mitigate cutting of the aircraft tire by foreign objects and the like and reduce weight of the aircraft tire.

### Background

A conventional aircraft radial tire may be used under high internal pressure, high load, and high speeds of over 360 km/h at takeoff and landing. When the tire spins at such high speeds, a crown region of the tire may grow radially outwardly due to high angular accelerations and velocity. If the tread grows radially outwardly, the tread rubber may be expanded in a circumferential direction of the tire.

Further, when the tire rides over a foreign object, the tire may be damaged, e.g., so-called "enveloping properties." When the tread rubber expands in the circumferential direction of the tire, a resistance force against the foreign object may be weak. Further, such trampled foreign object may easily enter the tread and damage the tire.

When an amount of growth of the crown region of the tire becomes greater than opposite shoulder portions of the tire, a diameter difference of the tire may be generated. This diameter difference may cause a drag phenomenon to the rotating tire. As a result, the shoulder regions of the tread may wear sooner than the crown region of the tread thereby shortening the life of the tread and the tire. This phenomenon is called deviated wear.

In order to enhance the enveloping properties of the tread and the wearing characteristics of the tread by suppressing the growing deformation thereof, a conventional radial tire may include a belt structure disposed between a tread rubber layer and a carcass of a crown region. The belt structure may restrain growing deformation of the crown region of the tread.

In view of the above, it is an object of the present invention to provide an aircraft radial tire in which a diameter of a tread surface is prevented from being increased during rotation, endurance against cutting occurred by a foreign object or the like is enhanced, and a weight of the tire is reduced.

US 4,934,428 A describes a tire in accordance with the preamble of claim 1. Similar tires are also known from JP 2017 013521 A, JP H03 168 08 A and JP 2008 189 238 A.

EP 3 750 721 A and EP 3 736 141 A disclose a tire with a first and a second unreinforced rubber layer. These layers are not part of the belt structure.

### Definitions

"Axial" and "axially" refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means at least two layers or plies of parallel cords, woven or unwoven, underlying the tread, unanchored to the bead, and preferably having cords inclined respect to the equatorial plane (EP) of the tire. The belt structure may also include plies of parallel cords inclined at relatively low angles, acting as restricting layers. The belt structure may also include one or more unreinforced rubber layers.

"Carcass" means the tire structure apart from the belt structure, tread, undertread, and sidewall rubber over the plies, but including the beads.

"Circumferential" and "circumferentially" mean lines or directions extending along the perimeter of the surface of the annular tire parallel to the equatorial plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire are comprise.

"Cord angle" means the acute angle, left or right in a plan view of the tire, formed by a cord with respect to the equatorial plane (EP). The "cord angle" is measured in a cured but uninflated tire.

"Denier" means the weight in grams per 9000 meters (unit for expressing linear density).

"Dtex" means the weight in grams per 1,000 meters.

"Density" means weight per unit length.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a high modulus material.

"Fiber" is a unit of matter, either natural or man-made that forms the basic element of filaments. Characterized by having a length at least 100 times its diameter or width.

"Footprint" means the contact patch or area of contact of the tire tread with a flat surface at zero speed and under normal load and pressure.

"Gauge" refers generally to a measurement, and specifically to a thickness measurement.

"Inner" means toward the inside of the tire and "outer" means toward its exterior.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies or which at least one ply has reinforcing cords preferably oriented at an angle of between 65° and 90° with respect to the equatorial plane (EP) of the tire.

"Radial ply tire" means a belted or circumferentially-restricted pneumatic tire in which at least one ply has cords which extend from bead to bead are laid at cord angles of from 65° to 90° with respect to the equatorial plane (EP) of the tire.

"Tread" means a molded rubber component which, when bonded to a tire casing, includes that portion of the tire that comes into contact with the road when the tire is normally inflated and under normal load.

### Summary of the Invention

The invention relates to a tire in accordance with claim 1.

Dependent claims refer to preferred embodiments of the invention.

A radial tire in accordance with the present invention includes a pair of bead cores; a carcass having one or a plurality of carcass plies extending from one of the bead cores to the other of the bead cores in a toroidal form; a tread portion circumferentially encircling the toroidal form of the carcass; and a belt structure disposed radially between the carcass and the tread portion having a main belt structure (which can also be called a main belt layer), a first, unreinforced rubber layer disposed on a radially outer side of the main belt structure or layer, a second, unreinforced rubber layer disposed within the main belt structure or layer, and a protective belt layer disposed on a radially outer side of the first, unreinforced rubber layer and a radially inner side of the tread portion, a radially outermost belt ply of the main belt structure or layer having a plurality of reinforcement cords each having a diameter, the first, unreinforced rubber layer having a first radial thickness between 0.5 and 4.0 times the diameter of the plurality of reinforcement cords of the radially outermost belt ply of the main belt structure or layer, and the second, unreinforced rubber layer having a second radial thickness between 0.5 and 2.5 times the diameter of the plurality of reinforcement cords of the radially outermost belt ply of the main belt structure or layer.

According to a preferred aspect of the radial tire, the second, unreinforced rubber layer has a second radial thickness between 0.5 and 1.5 times the diameter of the plurality of reinforcement cords of the radially outermost belt ply of the main belt structure.

According to still another preferred aspect of the radial tire, the second, unreinforced rubber layer has a second axial width in a range between 0.5 and 1.1 times an overall axial width of the belt structure.

According to yet another preferred aspect of the radial tire, the first, unreinforced rubber layer has a first radial thickness in a range of between 0.5 and 3.0 times the diameter of the plurality of reinforcement cords of the radially outermost belt ply of the main belt structure.

According to still another preferred aspect of the radial tire, the plurality of reinforcement cords of the radially outermost belt ply of the main belt structure is a plurality of organic fiber, merged cords.

According to yet another preferred aspect of the radial tire, the carcass has organic fiber cords.

According to another preferred aspect of the radial tire, the radial further comprises a third, unreinforced rubber layer disposed within the main belt structure radially inward of the second, unreinforced rubber layer.

According to still another preferred aspect of the radial tire, the radial further comprises a third, unreinforced rubber layer disposed within the main belt structure radially outward of the second, unreinforced rubber layer.

According to yet another preferred aspect of the radial tire, the third, unreinforced rubber layer has a third radial thickness in a range of between 0.5 and 2.5 times the diameter of the plurality of reinforcement cords of the radially outermost belt ply of the main belt structure.

According to another preferred aspect of the radial tire, the third, unreinforced rubber layer has a third radial thickness in a range of between 0.5 and 1.5 times the diameter of the plurality of reinforcement cords of the radially outermost belt ply of the main belt structure.

According to still another preferred aspect of the radial tire, the third, unreinforced rubber layer has a third axial width between 0.5 and 1.1 times an overall axial width of the belt structure.

Another radial tire in accordance a preferred aspect of the present invention includes a pair of bead cores; a carcass having one or a plurality of carcass plies extending from one of the bead cores to the other of the bead cores in a toroidal form; a tread portion circumferentially encircling the toroidal form of the carcass; and a belt structure disposed radially between the carcass and the tread portion having a main belt structure, a first, unreinforced rubber layer disposed on a radially outer side of the main belt structure, a second, unreinforced rubber layer disposed within the main belt structure, a third, unreinforced rubber layer disposed within the main belt structure, and a protective belt layer disposed on a radially outer side of the first, unreinforced rubber layer and a radially inner side of the tread portion, a radially outermost belt ply of the main belt structure having a plurality of reinforcement cords each having a diameter, the first, unreinforced rubber layer having a first radial thickness between 0.5 and 4.0 times the diameter of the plurality of reinforcement cords of the radially outermost belt ply of the main belt structure, the second, unreinforced rubber layer having a second radial thickness between 0.5 and 2.5 times the diameter of the plurality of reinforcement cords of the radially outermost belt ply of the main belt structure, and the third, unreinforced rubber layer having a third radial thickness between 0.5 and 2.5 times the diameter of the plurality of reinforcement cords of the radially outermost belt ply of the main belt structure.

According to another preferred aspect of the radial tire, the third, unreinforced rubber layer is disposed radially inward of the second, unreinforced rubber layer.

According to still another preferred aspect of the radial tire, the third, unreinforced rubber layer is disposed radially outward of the second, unreinforced rubber layer.

According to yet another preferred aspect of the radial tire, the second, unreinforced rubber layer has a second radial thickness in a range of between 0.5 and 1.5 times the diameter of the plurality of reinforcement cords of the radially outermost belt ply of the main belt structure.

According to still another preferred aspect of the radial tire, the third, unreinforced rubber layer has a third radial thickness in a range of between 0.5 and 1.5 times the diameter of the plurality of reinforcement cords of the radially outermost belt ply of the main belt structure.

According to another preferred aspect of the radial tire, the second and third, unreinforced rubber layers have a second and third axial width, respectively, in a range between 0.5 and 1.1 times an overall axial width of the belt structure.

### Brief Description of the Drawings

The present invention will be described by way of example and with reference to the accompanying drawings, in which:
FIG. 1 is a cross-sectional view of one half of an example radial aircraft tire.
FIG. 2 is a partial cross-sectional view of one half of the example radial aircraft tire of FIG. 1.
FIG. 3 is a cross-sectional view of one half of another example radial aircraft tire.

The figures, dimensions, or numbers of elements in the drawings that describe examples of the present invention are merely illustrative. Further, like reference numerals in the drawings refer to like elements.

### Detailed Description of Preferred Embodiments of the Invention

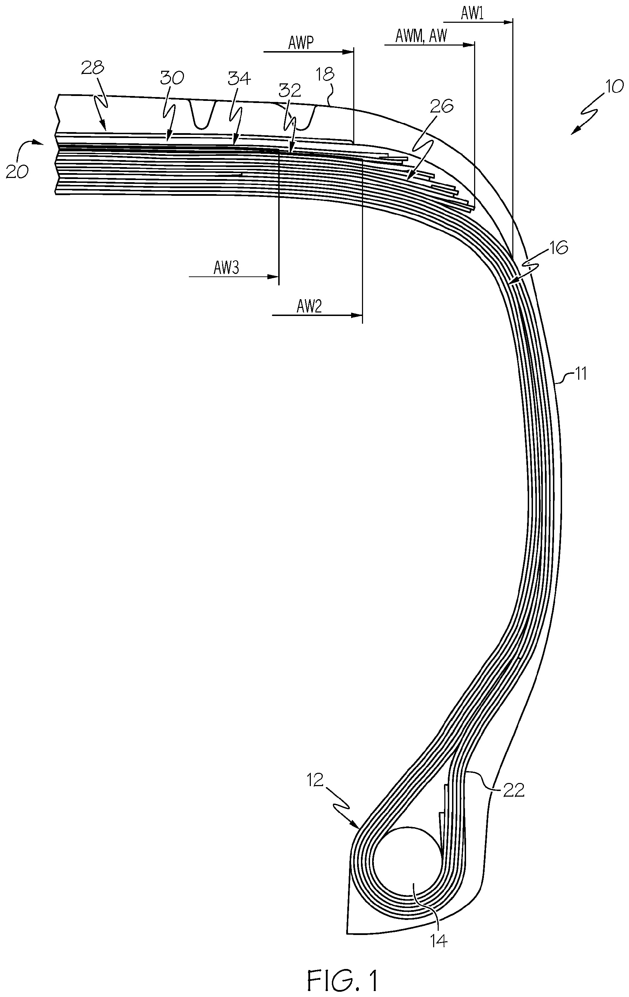

FIG. 1 illustrates a cross-sectional view of one half of an example radial tire 10 of the present invention. The tire 10 is an aircraft tire. The tire 10 is preferably symmetrical about an equatorial plane (EP) so that only one half of the tire 10 is illustrated. As shown, the tire 10 has a pair of bead portions 12 each containing a bead core 14 embedded therein. Each bead core 14 preferably has a circular cross-section. Each bead core 14 preferably has an aluminum, aluminum alloy, or other light weight alloy in a center portion and a plurality of steel sheath wires surrounding the center portion. A person skilled in the art may appreciate that other bead cores may also be utilized.

The tire 10 further comprises a sidewall portion 11 extending substantially radially outwardly from each of the bead portions 12 and a tread portion 18 extending substantially axially between the radially outer ends of the sidewall portions 11. Furthermore, the tire 10 includes a carcass 16 toroidally extending from one of the bead portions 12 to the other of the bead portions 12. The carcass 16 may include one carcass ply 22 or a plurality of carcass plies 22, such as for example, six or more carcass plies 22. In the example tire 10 of FIG. 1, the tire 10 includes six carcass plies 22. The one carcass ply 22 or the plurality of carcass plies 22 are preferably wound around the bead portions 12 to form turnup portions. Also, the one carcass ply 22 or plurality of carcass plies 22 may comprise rubber-coated organic fiber cords arranged in a radial direction of the tire 10 and retained by the bead cores 14. Note that, since other structures, such as a flipper, a chafer, a chipper, etc. may be similar to conventional structures, they are not depicted in FIG. 1.

The one carcass ply 22 or each of the plurality of carcass plies 22 may utilize, in one example, an organic fiber cord having a tensile fracture strength of 6.3 cN/dtex or higher, an elongation percentage of 0.2 to 1.8 percent when a load is 0.2 cN/dtex in the elongating direction, an elongation percentage of 1.4 to 6.4 percent when a load is 1.0 cN/dtex in the elongating direction, and an elongation percentage of 2.1 to 8.6 percent when a load is 2.9 cN/dtex in the elongating direction. The organic fiber cord of the one carcass ply 22 or each of the plurality of carcass plies 22 may be an aromatic polyamide fiber with an inner-layer coefficient of 0.12 to 0.85, or 0.17 to 0.51, and an outer-layer coefficient of 0.4 to 0.85.

The one carcass ply 22 or each of the plurality of carcass plies 22 may utilize, in another example, an organic fiber cord having a tensile fracture strength of 6.3 cN/dtex or higher, an elongation percentage of 0.2 to 2.0 percent when a load is 0.3 cN/dtex in the elongating direction, an elongation percentage of 1.5 to 7.0 percent when a load is 2.1 cN/dtex in the elongating direction, and an elongation percentage of 2.2 to 9.3 percent when a load is 3.2 cN/dtex in the elongating direction. The organic fiber cord of the one carcass ply 22 or each of the plurality of carcass plies 22 may be an aromatic polyamide fiber with an inner-layer coefficient of 0.12 to 0.85, or 0.17 to 0.51, and an outer-layer coefficient of 0.4 to 0.85.

The organic fiber cord of the one carcass ply 22 or each of the plurality of carcass plies 22 may be a merged, or hybrid, cord including aromatic polyamide fiber and aliphatic polyamide fiber. The weight ratio of the aromatic polyamide fiber and the aliphatic polyamide fiber may be from 100:27 to 100:255. Additionally, nylon may be used for part or all of the merged cord.

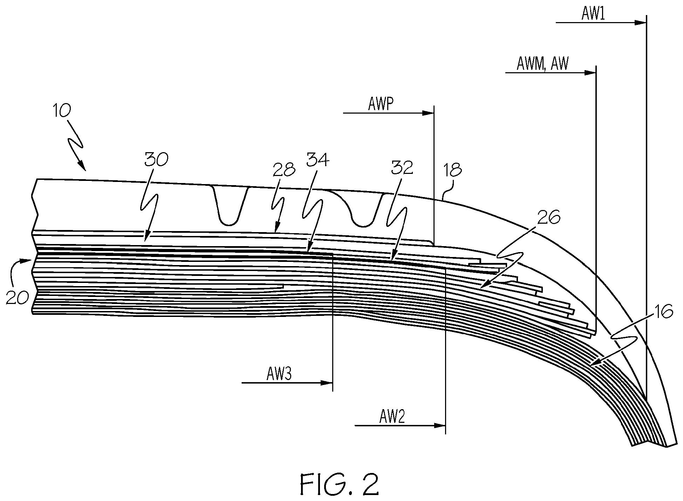

The example aircraft radial tire 10 has a belt structure 20 arranged radially between the carcass 16 and the tread portion 18. FIGS. 1 and 2 illustrate an example of one half of a belt structure 20 suitable for use in the example tire 10.

The belt structure 20 has an overall axial width AW. The belt structure 20 includes a main belt structure 26, which may also be called main belt layer 26, and a protective belt layer 28. The main belt structure 26 is disposed radially inward of the protective belt layer 28, such that the main belt structure 26 is disposed on a radially inner side of the belt structure 20 and the protective belt layer 28 is disposed on a radially outer side of the belt structure 20. The main belt structure 26 may has an axial width AWM, and the protective belt layer 28 has an axial width AWP.

In the example of FIGS. 1 and 2, the axial width AWM of the main belt structure 26 is the overall axial width AW of the belt structure 20. The axial width AWP of the protective belt layer 28 may be smaller or larger relative to the axial width AWM of the main belt structure 26. In some examples, a ratio of the axial width AWP of the protective belt layer 28 and the axial width AWM of the main belt structure 26 is between 0.30 and 1.10. In other examples, the axial width AWP of the protective belt layer 28 is 72 percent or in a range of from 66 to 78 percent of the axial width AWM of the main belt structure 26.

The main belt structure 26 preferably includes a plurality of belt plies, in a range of, for example, from two to 16 belt plies. The widths of the belt plies may be the same or vary relative to each other. Additionally, in one example, each of the plurality of belt plies of the main belt structure 26 may be formed with a plurality of reinforcement cords, wherein the plurality of reinforcement cords includes one or a plurality of organic fiber cords. Further, in another example, a radially outermost belt ply of the main belt structure 26 may be formed with a plurality of reinforcement cords, wherein the plurality of reinforcement cords includes one or a plurality of organic fiber cords. In either of the foregoing examples, the plurality of reinforcement cords have a diameter. The diameter of each of the plurality of reinforcement cords may be 1.02 mm. Also, in either of the foregoing examples, the plurality of reinforcement cords may have a cord angle in a range of between 1 and 45 degrees, or 10 and 45 degrees, with respect to an equatorial plane EP of the tire 10. Also, in either of the foregoing examples, if the plurality of reinforcement cords includes a plurality of organic fiber cords, the density of the plurality of organic fiber cords may be in a range of between 4.0 cords/10 mm to 10.0 cords/10 mm, or 7.0 cords/10 mm.

In examples where the plurality of reinforcement cords of the main belt structure 26 includes one or a plurality of organic fiber cords, the one or plurality of organic fiber cords may be a merged or hybrid cord, including aromatic polyamide fiber and aliphatic polyamide fiber. The weight ratio of the aromatic polyamide fiber and the aliphatic polyamide fiber may be from 100:27 to 100:255. Additionally, nylon may be used for part or all of the example merged cord.

The protective belt layer 28 may be formed of one belt ply or a plurality of belt plies. Additionally, in one example, the one or plurality of belt plies of the protective belt layer 28 may be formed with a plurality of reinforcement cords, wherein the plurality of reinforcement cords includes one or a plurality of organic fiber cords. The one or plurality of organic fiber cords may be each coated with rubber to form band-like thin bodies wound such that, whenever the thin bodies are wound once, or 360 degrees, the thin bodies may reciprocate between both axial ends of the belt plies, and the thin bodies may be inclined at an angle of 0 to 45 degrees with respect to the equatorial plane (EP) of the tire 10, and this winding may be carried out many times while offsetting the thin bodies as substantially the same distance as their widths in the circumferential direction of the tire 10 such that no gap is generated between the thin bodies (this is called endless zigzag-wound belt, hereinafter), as disclosed in U.S. Patent No. 7,712,499. As a result, the one or plurality of organic fiber cords, extending in substantially the circumferential direction of the tire 10 in a zigzag manner, may be embedded in the entire region of the one or plurality of belt plies of the protective belt layer 28 substantially uniformly by changing the bending direction at both axial ends of the belt plies. The plurality of reinforcement cords of the one or plurality of belt plies of the protective belt layer 28 may also have a cord angle, which may be greater than the cord angle of the one or plurality of organic fiber cords of the plurality of belt plies of the main belt structure 26.

In the protective belt layer 28, the plurality of reinforcement cords, which in some examples may be one or a plurality of organic fiber cords, may have an elastic modulus equal to or less than that of the elastic modulus of the plurality of reinforcement cords, which may be one or a plurality of organic fiber cords, of the main belt structure 26. Example organic fiber cords of the protective layer 28 may include an aliphatic polyamide fiber, such as nylon, or a merged cord with an aromatic polyamide fiber, such as aramid, and an aliphatic polyamide fiber, such as nylon. The protective belt layer 28 may include an endless zigzag-wound belt having a cord angle of the one or plurality of organic fiber cords being in a range of 0 to 45 degrees with respect to the tire equatorial plane, or an angle of 10 degrees.

As shown in FIGS. 1 and 2, the example radial tire 10 additionally includes a first, unreinforced (e.g., lacking cord reinforcement) rubber layer 30. In one preferred example, the first, unreinforced rubber layer 30 is disposed on a radially outer side of the main belt structure 26 or radially between the main belt structure 26 and the protective belt layer 28.

The first unreinforced rubber layer 30 has an axial width AW1. A minimum radial thickness of the first, unreinforced rubber layer 30 is preferably in a range of from 2.0 mm to 10.0 mm, or 4.6 mm to 10.0 mm, or 4.5 mm. The first, unreinforced rubber layer 30 may comprise a plurality of layers with an overall thickness within the above ranges, or more specifically, the first, unreinforced rubber layer 30 may have a radial thickness in a range of between 0.5 and 4.0 times the diameter of the plurality of reinforcement cords of the main belt structure 26. The protective belt layer 28 is preferably disposed on a radially outer side of the first, unreinforced rubber layer 30 and a radially inner side of a tread portion 18.

Moreover, as shown in FIGS. 1 and 2, the example tire 10 includes a second, unreinforced rubber layer 32. In one preferred example, the second, unreinforced rubber layer 32 is disposed within the main belt structure 26, and thus, radially inward relative to the first, unreinforced rubber layer 30. In another example, the second, unreinforced rubber layer 32 is disposed within the main belt structure 26 between any two, adjacent belt plies of the plurality of belt plies of the main belt structure 26. In another example, the second, unreinforced rubber layer 32 is disposed within the main belt structure 26 between two, radially outer, adjacent belt plies of the plurality of belt plies of the main belt structure 26.

Further, in some preferred examples, the example radial tire 10 may also include a third, unreinforced rubber layer 34, similar to the second, unreinforced rubber layer 32. In such examples, the second, unreinforced rubber layer 32 is preferably disposed between two, adjacent belt plies of the plurality of belt plies of the main belt structure 26, and the third, unreinforced rubber layer 34 is preferably disposed between any two, adjacent belt plies of the plurality of belt plies of the main belt structure 26 that are radially inward or radially outward from those of the second, unreinforced rubber layer 32.

A minimum thickness of the second and third, unreinforced rubber layers 32, 34 is preferably in a range of from 1.0 mm to 4.0 mm, or 2.0 mm. Also, in some preferred examples, the second and third, unreinforced rubber layers 32, 34 may each include a plurality of layers. In such examples, an overall thickness of each second and third, unreinforced rubber layer 32, 34 may be within the above ranges, or more specifically, each second and third, unreinforced rubber layer 32, 34 may have a radial thickness in a range of between 0.5 and 2.5 times the diameter of the plurality of reinforcement cords of the main belt structure 26. Additionally, the second and third, unreinforced rubber layers 32, 34 each have an axial width AW2, AW3, respectively. The axial width AW2, AW3 of each of the second and third, unreinforced rubber layer 32, 34 is preferably in a range of from 0.3 to 1.1 times the overall axial width AW of the belt structure 20, or as shown in FIGS. 1 and 2, the axial width AWM of the main belt structure 26.

In the example of FIGS. 1 and 2, the first, unreinforced rubber layer 30 is disposed radially outward of the main belt structure 26, the second, unreinforced rubber layer 32 is disposed radially between two, adjacent belt plies of the plurality of belt plies of the main belt structure 26, and the third, unreinforced rubber layer 34 is disposed between two, adjacent belt plies of the plurality of belt plies of the main belt structure 26 that are radially outward from belt plies between which the second, unreinforced rubber layer 32 is disposed.

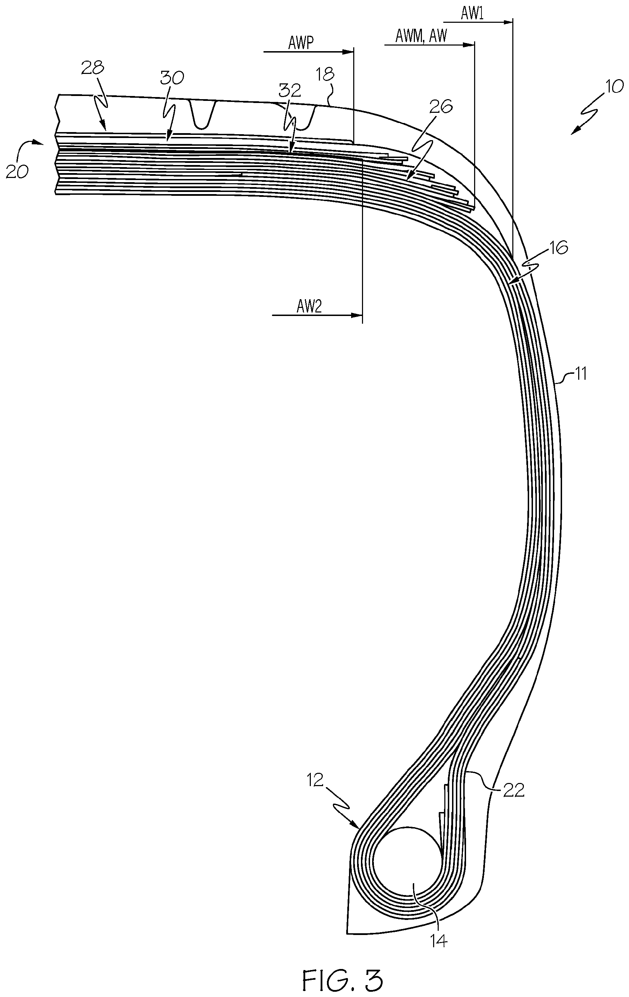

The example radial tire 10 of example of FIG. 3 is the same as the tire 10 in FIGS. 1 and 2 in all respects except that it includes only the first, unreinforced rubber layer 30 and the second, unreinforced rubber layer 32. In particular, the first, unreinforced rubber layer 30 is disposed radially outward of the main belt structure 26 and the second, unreinforced rubber layer 32 is disposed radially between two, adjacent belt plies of the plurality of belt plies of the main belt structure 26.

The above configurations of the rubber layers 30, 32, 34 result in an improved method and improved possibilities of repairing the example aircraft radial tire 10 after penetration by a foreign object through the tread portion 18, the protective belt layer 28, the first, unreinforced rubber layer 30, and into the main belt structure 26 and the second, unreinforced rubber layer 32 and third, unreinforced rubber layer 34 (or, in other examples, such as in FIG. 3, only the second, unreinforced rubber layer 32).

The repair process involves removing the foreign object that has penetrated the foregoing portions of the tire 10. Then, the process may include buffing a surface of the first, unreinforced rubber layer 30 as well as within the cut damaged area using any suitable buffing means. Next, the process may include filling the cut damaged area with a repair rubber. When the example aircraft radial tire 10 is penetrated by the foreign object as far as into the main belt structure 26 and the second, unreinforced rubber layer 32 and the third, unreinforced rubber layer 34 (or, in other examples, only the second, unreinforced rubber layer 32), the adhesion of the repair rubber is improved as it can adhere to the second, unreinforced rubber layer 32 and third, unreinforced rubber layer 34 (or, in other examples, only the second, unreinforced rubber layer 32).

If the thickness of the rubber layers 30, 32, 34 is too small, when retreading the tire 10, it may become difficult to remove the rubber layers 30, 32, 34 without damaging the main belt structure 26. Conversely, if the thickness of the rubber layers 30, 32, 34 is too large, not only does the weight of the tire increase, but heat generation of the tread portion 18 also increases, which are both disadvantageous for the performance of the tire 10. The thickness of the first, unreinforced rubber layer 30 may allow removal of the protective layer 28 during retread operations.

## Claims

1. A radial tire comprising a pair of bead cores (14), a carcass (16) having one or a plurality of carcass plies (22) extending from one of the bead cores (14) to the other of the bead cores (14) in a toroidal form, a tread portion (18) circumferentially encircling the toroidal form of the carcass (16), and a belt structure (20) disposed radially between the carcass (16) and the tread portion (19), the belt structure (20) having a main belt structure (26), a first, unreinforced rubber layer (30) disposed on a radially outer side of the main belt structure (26), and a protective belt layer (28) disposed on a radially outer side of the first, unreinforced rubber layer (30) and a radially inner side of the tread portion (18), a radially outermost belt ply of the main belt structure (26) having a plurality of reinforcement cords each having a diameter, the first, unreinforced rubber layer (30) having a first radial thickness between 0.5 and 4.0 times the diameter of the reinforcement cords of the radially outermost belt ply of the main belt structure (26), **characterized in that** the belt structure (20) further has a second, unreinforced rubber layer (32) disposed within the main belt structure (26), the second, unreinforced rubber layer (32) having a second radial thickness between 0.5 and 2.5 times the diameter of the reinforcement cords of the radially outermost belt ply of the main belt structure (26).

2. The radial tire of claim 1, wherein the second, unreinforced rubber layer (32) has a second radial thickness between 0.5 and 1.5 times the diameter of the reinforcement cords of the radially outermost belt ply of the main belt structure (26).

3. The radial tire of claim 1 or 2, wherein the second, unreinforced rubber layer (32) has a second axial width in a range between 0.5 and 1.1 times an overall axial width of the belt structure (20).

4. The radial tire of at least one of the previous claims, wherein the first, unreinforced rubber layer (30) has a first radial thickness in a range of between 0.5 and 3.0 times the diameter of the reinforcement cords of the radially outermost belt ply of the main belt structure (26).

5. The radial tire of at least one of the previous claims, wherein the plurality of reinforcement cords of the radially outermost belt ply of the main belt structure (26) is a plurality of organic fiber merged cords.

6. The radial tire of at least one of the previous claims, wherein the carcass has organic fiber cords.

7. The radial tire of at least one of the previous claims, further comprising a third, unreinforced rubber layer (34) disposed within the main belt structure (26) radially inward of the second, unreinforced rubber layer (32).

8. The radial tire of at least one of the previous claims 1 to 6, further comprising a third, unreinforced rubber layer (34) disposed within the main belt structure (26) radially outward of the second, unreinforced rubber layer (32).

9. The radial tire of claim 7 or 8, wherein the third, unreinforced rubber layer (34) has a third radial thickness in a range of between 0.5 and 2.5 times the diameter of the reinforcement cords of the radially outermost belt ply of the main belt structure (26).

10. The radial tire of claim 9, wherein the third, unreinforced rubber layer (34) has a third radial thickness in a range of between 0.5 and 1.5 times the diameter of the reinforcement cords of the radially outermost belt ply of the main belt structure (26).

11. The radial tire of claim 7, 8, 9 or 10, wherein the third, unreinforced rubber layer (34) has a third axial width between 0.5 and 1.1 times an overall axial width of the belt structure (20).

12. The radial tire of at least one of the previous claims, wherein the tire is an aircraft tire.

13. The radial tire of at least one of the previous claims, wherein the carcass comprises a plurality or carcass plies, preferably four or more carcass plies.

## Patentansprüche

1. Radialer Lage Reifen, der das Folgende umfasst: ein Paar Wulstkernen (14); eine Karkasse (16), die eine oder mehrere Karkassenlagen (22) aufweist, die sich von einem Wulstkern der Wulstkerne (14) zu dem anderen Wulstkern der Wulstkerne (14) in einer toroidalen Form erstrecken ; einen Abschnitt (18) in Form einer Lauffläche, der in der radialen Richtung die toroidale Form der Karkasse (16) umschließt; und eine Gürtelstruktur (20), die in der radialen Richtung zwischen der Karkasse (16) und dem Abschnitt (18) in Form einer Lauffläche angebracht ist, wobei die Gürtelstruktur (20) eine Hauptgürtelstruktur (26) aufweist; eine erste Schicht aus unverstärktem Kautschuk (30), die auf einer in der radialen Richtung äußeren Seite der Hauptgürtelstruktur (26) angebracht ist; sowie eine Schicht in Form eines Nylonstreifens (28), die auf einer in der radialen Richtung inneren Seite der ersten Schicht aus unverstärktem Kautschuk (30) und auf einer in der radialen Richtung inneren Seite des Abschnitts (18) in Form einer Lauffläche angebracht ist; wobei eine am weitesten in der radialen Richtung liegende Gürtellage der Hauptgürtelstruktur (26) eine Anzahl von Verstärkungskorden aufweist, die jeweils eine erste radiale Dicke aufweisen, die in einem Bereich zwischen dem 0,5- und 4,0-fachen des Durchmessers der Verstärkungskorde der am weitesten in der radialen Richtung liegenden Gürtellage der Hauptgürtelstruktur (26) liegt, die in der radialen Richtung am weitesten außen angebracht ist; **dadurch gekennzeichnet, dass** die Gürtelstruktur (20) ferner eine zweite Schicht aus unverstärktem Kautschuk (32) aufweist, die innerhalb der Hauptgürtelstruktur (26) angebracht ist; wobei die zweite Schicht aus unverstärktem Kautschuk (32) eine zweite radiale Dicke aufweist, die in einem Bereich zwischen dem 0,5- und 2,5-fachen des Durchmessers der Verstärkungskorde der am weitesten in der radialen Richtung liegenden Gürtellage der Hauptgürtelstruktur (26) liegt.

2. Radialer Lage Reifen nach Anspruch 1, wobei die zweite Schicht aus unverstärktem Kautschuk (32) eine zweite radiale Dicke aufweist, die in einem Bereich zwischen dem 0,5- und 1,5-fachen des Durchmessers der Verstärkungskorde der am weitesten in der radialen Richtung liegenden Gürtellage der Hauptgürtelstruktur (26) liegt.

3. Radialer Lage Reifen nach Anspruch 1 oder 2, wobei die zweite Schicht aus unverstärktem Kautschuk (32) eine zweite axiale Breite aufweist, die in einem Bereich liegt, der das 0,5- bis 1,1-fache einer axialen Gesamtbreite der Gürtelstruktur (20) darstellt.

4. Radialer Lage Reifen nach mindestens einem der vorhergehenden Ansprüche, wobei die erste Schicht aus unverstärktem Kautschuk (30) eine erste radiale Dicke aufweist, die in dem Bereich zwischen dem 0,5- und 3,0-fachen des Durchmessers der Verstärkungskorde der am weitesten in der radialen Richtung liegenden Gürtellage der Hauptgürtelstruktur (26) liegt.

5. Radialer Lage Reifen nach mindestens einem der vorhergehenden Ansprüche, wobei die Anzahl der Verstärkungskorden der am weitesten in der radialen Richtung liegenden Gürtellage der Hauptgürtelstruktur (26) eine Anzahl von verschmolzenen Korden auf Basis von organischen Fasern darstellt.

6. Radialer Lage Reifen nach mindestens einem der vorhergehenden Ansprüche, wobei die Karkasse Korden auf Basis von organischen Fasern enthält.

7. Radialer Lage Reifen nach mindestens einem der vorhergehenden Ansprüche, der ferner eine dritte Schicht aus unverstärktem Kautschuk (34) umfasst, die innerhalb der Hauptgürtelstruktur (26) in der radialen Richtung innerhalb der zweiten Schicht aus unverstärktem Kautschuk (32) angebracht ist.

8. Radialer Lage Reifen nach mindestens einem der Ansprüche 1 bis 6, der ferner eine dritte Schicht aus unverstärktem Kautschuk (34) umfasst, die innerhalb der Hauptgürtelstruktur (26), in der radialen Richtung außerhalb der zweiten Schicht aus unverstärktem Kautschuk (32) angebracht ist.

9. Radialer Lage Reifen nach Anspruch 7 oder 8, wobei die dritte Schicht aus unverstärktem Kautschuk (34) eine dritte axiale Breite aufweist, die in einem Bereich zwischen dem 0,5- und 2,5-fachen des Durchmessers der Verstärkungskorde der am weitesten in der radialen Richtung liegenden Gürtellage der Hauptgürtelstruktur (26) liegt.

10. Radialer Lage Reifen nach Anspruch 9, wobei die dritte Schicht aus unverstärktem Kautschuk (34) eine dritte axiale Breite aufweist, die in einem Bereich zwischen dem 0,5- und 1,5-fachen des Durchmessers der Verstärkungskorde der am weitesten in der radialen Richtung liegenden Gürtellage der Hauptgürtelstruktur (26) liegt.

11. Radialer Lage Reifen nach Anspruch 7, 8, 9 oder 10, wobei die dritte Schicht aus unverstärktem Kautschuk (32) eine dritte axiale Breite aufweist, die in einem Bereich liegt, der das 0,5- bis 1,1-fache einer axialen Gesamtbreite der Gürtelstruktur (20) darstellt.

12. Radialer Lage Reifen nach mindestens einem der vorhergehenden Ansprüche, wobei der Reifen ein Reifen für ein Flugzeug ist.

13. Radiallagenreifen nach mindestens einem der vorhergehenden Ansprüche, wobei die Karkasse eine Anzahl von Karkassenlagen umfasst, vorzugsweise vier oder mehr Karkassenlagen.

## Revendications

1. Bandage à nappe radiale qui comprend : une paire de fils de tringles (14) ; une carcasse (16) qui possède une ou plusieurs nappes de carcasse (22) qui s'étendent à partir d'un fil de tringle parmi les fils de tringles (14) jusqu'à l'autre fil de tringle parmi les fils de tringles (14) sous une forme toroïdale ; une portion (18) en forme de bande de roulement qui encercle dans la direction circonférentielle la forme toroïdale de la carcasse (16) ; et une structure de ceintures (20) qui est disposée, dans la direction radiale, entre la carcasse (16) et la portion (18) en forme de bande de roulement, dans laquelle la structure de ceintures (20) possède une structure de ceintures principale (26) ; une première couche de caoutchouc non renforcé (30) qui est disposée sur un côté, externe dans la direction radiale, de la structure de ceintures principale (26) ; ainsi qu'une couche sous la forme d'une ceinture de protection (28) qui est disposée sur un côté, interne dans la direction radiale, de la première couche de caoutchouc non renforcé (30) et sur un côté, interne dans la direction radiale, de la portion (18) en forme de bande de roulement ; dans lequel une nappe de ceinture de la structure de ceintures principale (26) possède un certain nombre de câblés de renforcement qui possèdent chacun une première épaisseur radiale qui représente entre 0,5 et 4,0 fois le diamètre des câblés de renforcement de la nappe de ceinture de la structure de ceintures principale (26), située le plus à l'extérieur dans la direction radiale ; **caractérisé en ce que** la structure de ceintures (20) possède en outre une deuxième couche de caoutchouc non renforcé (32) qui est disposée au sein de la structure de ceintures principale (26) ; dans lequel la deuxième couche de caoutchouc non renforcé (32) possède une deuxième épaisseur radiale qui représente entre 0,5 et 2,5 fois le diamètre des câblés de renforcement de la nappe de ceinture de la structure de ceintures principale (26), située le plus à l'extérieur dans la direction radiale.

2. Bandage à nappe radiale selon la revendication 1, dans lequel la deuxième couche de caoutchouc non renforcé (32) possède une deuxième épaisseur radiale qui représente entre 0,5 et 1,5 fois le diamètre des câblés de renforcement de la nappe de ceinture de la structure de ceintures principale (26), située le plus à l'extérieur dans la direction radiale.

3. Bandage à nappe radiale selon la revendication 1 ou 2, dans lequel la deuxième couche de caoutchouc non renforcé (32) possède une deuxième largeur axiale qui se situe dans une plage qui représente entre 0,5 et 1,1 fois une largeur axiale globale de la structure de ceintures (20).

4. Bandage à nappe radiale selon au moins une des revendications précédentes, dans lequel la première couche de caoutchouc non renforcé (30) possède une première épaisseur radiale qui représente entre 0,5 et 3,0 fois le diamètre des câblés de renforcement de la nappe de ceinture de la structure de ceintures principale (26), située le plus à l'extérieur dans la direction radiale.

5. Bandage à nappe radiale selon au moins une des revendications précédentes, dans lequel lesdits plusieurs câblés de renforcement de la nappe de ceinture de la structure de ceintures principale (26), située le plus à l'extérieur dans la direction radiale représentent un certain nombre de câblés fusionnés à base de fibres organiques.

6. Bandage à nappe radiale selon au moins une des revendications précédentes, dans lequel la carcasse possède des câblés à base de fibres organiques.

7. Bandage à nappe radiale selon au moins une des revendications précédentes, qui comprend en outre une troisième couche de caoutchouc non renforcé (34) qui est disposée au sein de la structure de ceintures principale (26), à l'intérieur, dans la direction radiale, de la deuxième couche de caoutchouc non renforcé (32).

8. Bandage à nappe radiale selon au moins une des revendications précédentes 1 à 6, qui comprend en outre une troisième couche de caoutchouc non renforcé (34) qui est disposée au sein de la structure de ceintures principale (26), à l'extérieur, dans la direction radiale, de la deuxième couche de caoutchouc non renforcé (32).

9. Bandage à nappe radiale selon la revendication 7 ou 8, dans lequel la troisième couche de caoutchouc non renforcé (34) possède une troisième épaisseur radiale qui représente entre 0,5 et 2,5 fois le diamètre des câblés de renforcement de la nappe de ceinture de la structure de ceintures principale (26), située le plus à l'extérieur dans la direction radiale.

10. Bandage à nappe radiale selon la revendication 7 ou 8, dans lequel la troisième couche de caoutchouc non renforcé (34) possède une troisième épaisseur radiale qui représente entre 0,5 et 1,5 fois le diamètre des câblés de renforcement de la nappe de ceinture de la structure de ceintures principale (26), située le plus à l'extérieur dans la direction radiale.

11. Bandage à nappe radiale selon la revendication 7, 8, 9 ou 10, dans lequel la troisième couche de caoutchouc non renforcé (32) possède une troisième largeur axiale qui se situe dans une plage qui représente entre 0,5 et 1,1 fois une largeur axiale globale de la structure de ceintures (20).

12. Bandage à nappe radiale selon au moins une des revendications précédentes, dans lequel le bandage est un bandage destiné à un aéroplane.

13. Bandage à nappe radiale selon au moins une des revendications précédentes, dans lequel la carcasse comprend un certain nombre de nappes de carcasse, de préférence quatre nappes de carcasses ou plus.
